**Europäisches Patentamt**

**European Patent Office**

**Office européen des brevets**

(19)

(11) Veröffentlichungsnummer: **0 077 949**
**B1**

(12) # EUROPÄISCHE PATENTSCHRIFT

(45) Veröffentlichungstag der Patentschrift:
17.09.86

(51) Int. Cl.⁴: **C 04 B 24/38**

(21) Anmeldenummer: **82109307.7**

(22) Anmeldetag: **08.10.82**

(54) **Verfahren zur Herstellung von Hydroxypropylstärke.**

(30) Priorität: **20.10.81 DE 3141499**

(43) Veröffentlichungstag der Anmeldung:
**04.05.83 Patentblatt 83/18**

(45) Bekanntmachung des Hinweises auf die Patenterteilung:
**17.09.86 Patentblatt 86/38**

(84) Benannte Vertragsstaaten:
**BE DE FR GB IT NL SE**

(56) Entgegenhaltungen:
**GB - A - 2 029 431**
**US - A - 2 900 268**
**US - A - 3 033 853**
**US - A - 3 378 546**

(73) Patentinhaber: **Wolff Walsrode Aktiengesellschaft,
Postfach, D-3030 Walsrode 1 (DE)**

(72) Erfinder: **Teubner, Helwig, Dr., Kattenstrasse 17,
D-6450 Hanau (DE)**
Erfinder: **Oppermann, Wilhelm, Amselsteig 25,
D-3036 Bomlitz (DE)**

(74) Vertreter: **Kutzenberger, Helga, Dr. et al, c/o Bayer AG
Konzernverwaltung RP Patentabteilung,
D-5090 Leverkusen, Bayerwerk (DE)**

## Beschreibung

Hydroxypropylstärke (HPS), die man durch Umsetzung von Stärke mit Propylenoxid erhält, wird zusammen mit Celluloseethern in der Bauindustrie als sogenanntes Stellmittel eingesetzt. Der Zusatz des Stellmittels beeinflusst die Rheologie eines Putzes und verbessert dessen Verarbeitungseigenschaften. Insbesondere verbessert der Zusatz des Stellmittels die Standfestigkeit des aufgespritzten Putzes, erleichtert die Verarbeitung des Putzes und die sogenannte Schlämmebildung, d. h. das Herauslösen und das gleichmässige Verteilen von Kleinstpartikeln aus dem aufgetragenen Putz.

Da sich die Standfestigkeit des Putzes, die mit der Lösegeschwindigkeit des HPS zusammenhängt, schnell erhöhen soll, liegt eine gute Wirksamkeit der zugesetzten HPS als Stellmittel vor, wenn die Andickung nach ca. 10 sek. erfolgt. Neben der Verdickungsentwicklung ist auch die Stabilität der Verdickung von Bedeutung, d. h. die sich rasch einstellende, hohe Anfangsviskosität muss über einen längeren Zeitraum, und zwar ca. 15 min. lang, erhalten bleiben.

Verfahren zur Herstellung von HPS sind bekannt. Dabei arbeitet man nach dem sogenannten Trockenverfahren, wobei Stärke mit katalytischen Mengen einer Base und dem Veretherungsmittel, Propylenoxid, direkt umgesetzt wird (US-PS 2 516 632, 2 516 633, 2 516 634 und 2 733 238). Die dabei erreichten molaren Substitutionsgrade (MS) reichen von 0,05–1,5. Das fortschrittlichere Verfahren besteht jedoch in der Veretherung in Gegenwart eines inerten Lösungsmittels (US-PS 2 845 417) wie Methanol, Ethanol, Isopropanol oder deren Mischungen. Dabei werden ähnlich wie bei der Herstellung von Hydroxypropylcellulose MS-Werte von ca. 0,4–0,9 erreicht (US-PS 3 652 539). Nachteilig bei dieser Verfahrensvariante ist, dass das inerte Reaktionsmedium nach der Veretherung entfernt werden muss und das Veretherungsmittel oft nur schwierig davon abgetrennt werden kann. Ausserdem kann die Wirkung der so hergestellten HPS nicht ausreichend sein.

Gegenstand der vorliegenden Erfindung ist ein Verfahren zur Herstellung von Hydroxypropylstärke mit molaren Substitutionsgraden (MS) von höchstens 1, dadurch gekennzeichnet, dass die Stärke in Gegenwart von 10–20 Gew.% Wasser bezogen auf Propylenoxid und Wasser mit einem Überschuss von 3–10 Mol Propylenoxid/Mol Stärke verethert wird.

Die erfindungsgemäss hergestellte HPS eignet sich ausgezeichnet als Stellmittel für Gips- und Zementputz.

Bei dem erfindungsgemässen Verfahren war nicht zu erwarten, dass es zu einer Hydroxypropylstärke mit niedrigem MS vorzugsweise 0,4–0,8 führt, da bei der Herstellung von Hydroxypropyl-Cellulose der Einsatz von überschüssigen Propylenoxid ohne zusätzliches inertes Reaktionsmedium zu MS-Werten von 3–5 führt (US-PS 3 278 520). Dementsprechend höhere MS-Werte wären daher auch bei der erfindungsgemässen Herstellung von HPS zu erwarten gewesen.

Unter den Begriff des MS-Wertes wird folgendes verstanden:

Jede Anhydroglucose-Einheit des Cellulose- bzw. des Stärkemoleküls hat 3 OH-Gruppen. Während der DS-Wert die durchschnittliche Anzahl der pro Anhydroglucose-Einheit substituierten OH-Gruppen angibt, beschreibt der MS-Wert die durchschnittliche Anzahl Mole des Reaktanten, die pro Anhydroglucose-Einheit gebunden wurden. Für Alkyl-, Carboxyalkyl-, oder Acylderivate von Cellulose oder Stärke sind die DS- und MS-Werte identisch. Bei Hydroxyalkylderivaten der Cellulose und der Stärke ist der MS-Wert im allgemeinen grösser als der DS-Wert. Der Grund hierfür liegt darin, dass bei der Einführung einer Hydroxyalkylgruppe in das Cellulose- oder Stärkemolekül eine zusätzliche OH-Gruppe gebildet wird, die ebenfalls der Hydroxyalkylierung zugänglich ist. Daraus folgt, dass bei der Hydroxyalkylierung von Cellulose oder Stärke Seitenketten von beträchtlicher Länge gebildet werden können. Das Verhältnis MS/DS stellt die durchschnittliche Länge dieser Seitenketten dar. Daraus geht hervor, dass der DS-Wert höchstens 3 betragen, während der MS-Wert erheblich höhere Werte annehmen kann, abhängig davon, in welchem Ausmass die Seitenketten gebildet wurden.

Die erfindungsgemässe Veretherung sollte bei 50–75 °C, vorzugsweise bei 60–70 °C in Gegenwart von 0,01–0,1, vorzugsweise 0,04–0,06 Mol NaOH/Mol Stärke, einem Wassergehalt von 10–20 Gew.-%, vorzugsweise 15–16 Gew.-%, bezogen auf Propylenoxid und Wasser, und von 3–10, vorzugsweise 4–5 Mol, Propylenoxid/Mol Stärke durchgeführt werden. Dabei wird nach dem Zusammengeben der Reagenzien entweder sofort auf die Veretherungstemperatur aufgeheizt und ca. 4 Stunden verethert oder nach einstündiger Alkalisierzeit bei Normaltemperatur (25 °C) auf die Veretherungstemperatur erhöht und bei dieser ca. 3 Stunden verethert.

Überraschenderweise wird unter den erfindungsgemässen Bedingungen der Veretherung nur etwa 10–15% des im Überschuss zur Stärke eingesetzten Propylenoxids zu Nebenprodukten (vorwiegend Propylenglycole) umgesetzt, so dass rund 75% des eingesetzten Propylenoxids wiedergewonnen und nach Ergänzung mit einer entsprechenden Menge an frischem Propylenoxid für den nächsten Ansatz eingesetzt werden können.

Die Neutralisation der eingesetzten Natronlauge kann mit einer Mineralsäure oder einer organischen Säure erfolgen. Wegen des geringen Alkali-Einsatzes entsteht ein niedriger Salzgehalt. Das fertige Produkt braucht vor dem Einsatz keiner Reinigung unterworfen zu werden. Es eignet sich hervorragend als Stellmittel für Putze, insbesondere Gipsputze, wobei den Putzzusätzen 0,005–0,08, vorzugsweise 0,02–0,05% der erfindungsgemäss hergestellten Hydroxypropylstärke zugesetzt werden.

### Beispiel 1

6 466 g Maisstärke (Feuchtigkeitsgehalt: 9,8%) werden in einem Reaktor von 40 l Nutzinhalt vorgelegt. Danach erfolgt Zugabe von 8 352 g Propylenoxid und 226 g Wasser. Bei gleichmässigem Rühren werden sodann 745 g 9,66 Gew.-% Natronlauge aufgesprüht, und es wird eine Stunde lang bei Raumtemperatur alkalisiert. Die Temperatur wird dann auf 70 °C erhöht und drei Stunden lang gehalten. Es stellt sich dabei ein Druck von 2–2,5 bar ein. Nach beendeter Veretherung werden zur Neutralisation des Alkali 97,4 g 85 Gew.-%ige Ameisensäure in den Reaktor gedrückt. Sodann wird überschüssiges Propylenoxid abgezogen und in ein gekühltes Auffanggefäss geleitet. Dabei werden 6500 g Propylenoxid wiedergewonnen, welches mit 1 852 g frischem Propylenoxid versetzt und für den nächsten Ansatz verwendet wird. Der molare Substitutionsgrad MS des Produktes beträgt 0,76.

### Beispiel 2

6 466 g Maisstärke (Feuchtigkeitsgehalt: 9,8%) werden in einem Reaktor vorgelegt und mit 8 352 g Propylenoxid, bestehend aus 6 500 g Ausgangspropylenoxid und 1 852 g frischem Propylenoxid (vgl. Beispiel 1) und mit 226 g Wasser versetzt. Unter gleichmässigem Rühren werden 745 g 9,66 Gew.-% NaOH aufgesprüht, anschliessend wird eine Stunde lang bei Raumtemperatur alkalisiert. Die Temperatur wird danach auf 70 °C erhöht und drei Stunden lang gehalten. Nach beendeter Veretherung erfolgt die Neutralisation des Alkalis wie unter Beispiel 1 beschrieben. Überschüssiges Propylenoxid wird abgezogen und wiederum in einer gekühlten Vorlage aufgefangen. Der molare Substitutionsgrad des Produktes beträgt 0,57.

### Vergleichsbeispiel 3

3 232,8 g Maisstärke (Feuchtigkeitsgehalt: 9,8%), 2 320 g Isopropanol und 2 240 g Wasser werden in dem Reaktor vorgelegt. Unter gleichmässigem Rühren werden 288 g 50 Gew.-%ige NaOH aufgesprüht, und es wird eine Stunde lang bei Raumtemperatur alkalisiert. Nach beendeter Alkalisierung erfolgten Zugabe von weiteren 15 400 g Isopropanol und 5 220 g Propylenoxid. Sodann wird die Temperatur auf 63 °C erhöht und drei Stunden lang dabei belassen. Nach beendeter Veretherung werden zur Neutralisation des Alkalis 194,8 g 85%ige Ameisensäure in den Autoklaven gedrückt. Der Autoklav wird anschliessend abgekühlt, das Reaktionsprodukt wird vom Isopropanol abgetrennt und bei Raumtemperatur getrocknet. Das Produkt hat einen MS-Wert von 0,43.

Prüfung als Stellmittel:

Ein Gipsputz-Ansatz aus 70 g Stuckgips, 26 g Kalksand, 3,7 g Calciumhydroxid und 0,25 g Methylcellulose wird mit 0,05 g Hydroxypropylstärke in einem Becher vermischt, mit 39 g Wasser versetzt und mit einem Holzspachtel angerührt.

Die Prüfung wird von einem erfahrenen Fachmann im Vergleich zu einem Ansatz ohne Zusatz von Hydroxypropylstärke als Stellmittel durchgeführt. Dabei wird die Zeit in Sekunden bis zur merklichen Andickung bestimmt. Der Grad der Andickung wird qualitativ durch den Rührwiderstand bestimmt. Die Stabilität der Verdickung wird durch Fortsetzung des Rührvorgangs über einen längeren Zeitraum (mindestens 15 Minuten) geprüft.

Gipsputzansätze mit Zusätzen von 0,05 g Hydroxypropylstärke aus Beispiel 1 und Beispiel 2 zeigen eine schnelle Andickung innerhalb von 10 Sekunden, eine gute Verdickungswirkung und sehr gute Stabilität, d.h. der Rührwiderstand nimmt in einem Zeitraum von 15 Minuten nur geringfügig ab. Der Vergleichsansatz mit Zusatz von 0,05 g Hydroxypropylstärke aus Beispiel 3 zeigt eine derart geringe Verdickungswirkung, dass das Produkt als Stellmittel nicht geeignet ist.

### Patentansprüche

1. Verfahren zur Herstellung von Hydroxypropylstärke mit molaren Substitutionsgraden (MS) von höchstens 1, dadurch gekennzeichnet, dass die Stärke in Gegenwart von 10–20 Gew.-% Wasser, bezogen auf Propylenoxid und Wasser, mit einem Überschuss von 3–10 Mole Propylenoxid/Mol Stärke verethert wird.

2. Verfahren nach Anspruch 1, dadurch gekennzeichnet, dass der Wassergehalt 15–16 Gew.-% beträgt und 4–5 Mol Propylenoxid/Mol Stärke verwendet werden.

3. Verfahren nach Anspruch 1 oder 2, dadurch gekennzeichnet, dass bei 50–75 °C in Gegenwart von 0,01–0,1 Mol NaOH/Mol Stärke verethert wird.

4. Verfahren nach Ansprüchen 1–3, dadurch gekennzeichnet, dass bei 60–70 °C in Gegenwart von 0,04–0,06 Mol NaOH/Mol Stärke verethert wird.

5. Verfahren nach Ansprüchen 1–4, dadurch gekennzeichnet, dass zunächst bei Zimmertemperaturen mit wässriger Natronlauge alkalisiert und anschliessend bei 50–75 °C verethert wird.

6. Verwendung der Hydroxypropylstärke, erhalten nach Ansprüchen 1–5 als Stellmittel für Putze.

### Claims

1. Process for the production of hydroxypropyl starch having molar substitution degrees (MS) of at most 1, characterised in that the starch is etherified with an excess of 3–10 moles of propylene oxide per mole of starch, in the presence of 10–20% by weight of water, based on propylene oxide and water.

2. Process according to Claim 1, characterised in that the water content is 15–16% by weight and 4–5 moles of propylene oxide per mole of starch are used.

3. Process according to Claim 1 or 2, characterised in that the etherification is carried out at 50–70 °C in the presence of 0.01–0.1 mole of NaOH per mole of starch.

4. Process according to Claims 1–3, characterised in that the etherification is carried out at 60–70 °C in the presence of 0.04–0.06 mole of NaOH per mole of starch.

5. Process according to Claims 1–4, characterised in that alkalisation with aqueous sodium hydroxide solution is first carried out at room temperatures and then etherification is carried out at 50–75 °C.

6. Use of the hydroxypropyl starch, obtained according to Claims 1–5, as a set-up agent for plasters.

**Revendications**

1. Procédé pour la fabrication d'hydroxypropyl-amidon ayant des degrés de substitution molaires (SM) de 1 au plus, caractérisé en ce que l'on éthérifie l'amidon en présence de 10–20% en poids d'eau, par rapport au total de l'oxyde de propylène et de l'eau, avec un excès de 3–10 mol d'oxyde de propylène par mole d'amidon.

2. Procédé selon la revendication 1, caractérisé en ce que la teneur en eau est de 15–16% en poids et l'on utilise 4–5 mol d'oxyde de propylène par mole d'amidon.

3. Procédé selon la revendication 1 ou 2, caractérisé en ce que on éthérifie à 50–75 °C en présence de 0,01–0,1 mol de NaOH par mole d'amidon.

4. Procédé selon les revendications 1–3, caractérisé en ce que l'on éthérifie à 60–70 °C en présence de 0,04–0,06 mol de NaOH par mole d'amidon.

5. Procédé selon les revendications 1–4, caractérisé en ce que l'on alcalinise d'abord par la lessive de soude aqueuse à la température ambiante et on éthérifie ensuite à 50–75 °C.

6. Utilisation de l'hydroxypropylamidon obtenu selon les revendications 1–5 comme agent de fixation pour enduit.